# EUROPEAN PATENT APPLICATION

(11) **EP 0 535 956 A1**
(43) Date of publication of application: **07.04.1993**
(21) Application number: 92308970.0
(22) Date of filing: 01.10.1992
(51) Int. Cl.: G21D 3/14, G21C 7/36

(54) **Actuator control system**

(30) Priority: 04.10.1991 US 771683
(71) Applicant: GENERAL ELECTRIC COMPANY, Schenectady, NY 12345 (US)
(72) Inventor: Youngborg, Lamont Hallner, San Jose, California 95124 (US)
(74) Representative: Lupton, Frederick

(57) **Abstract**

A control system (32) for an actuator output rod (48) includes an electrical motor (42) for powering a mechanical interface (52) for positioning the actuator rod (48) in response to rotation of the motor (42). A sensor (60) is operatively joined to the actuator rod (48) to provide a position signal (Pₐ) indicative of the position thereof. The electrical controller (56) is operatively joined to the motor (42) and the sensor (60) for controlling the rotational speed of the motor (42) to control the actuator rod position in response to a position demand signal (P_{d}). The controller (56) includes a predetermined actuator rod speed schedule (74) for providing an actuator rod speed signal (Sₛ) to control the motor speed and in turn the actuator rod position in response to a position error signal (E). The schedule provides a zero value of the speed signal up to a deadband value (E_{d}) of the error signal, a modulating value (Sₘ) of the speed signal from the error signal deadband (E_{d}) up to a modulating value (Eₘ) of the error signal which is greater than the former, and a transient value (SJ of the speed signal which is greater than the modulating speed (Sₘ) for values of the error signal (E) greater than the transient value (EJ hereof and greater than the modulating value (Eₘ) thereof.

## Description

### Technical Field

The present invention relates generally to control systems for positioning actuator output rods, and, more specifically, to an actuator control system usable for controlling a feedwater control valve for controlling water level in a nuclear reactor pressure vessel.

### Background Art

A boiling water nuclear reactor includes a reactor pressure vessel surrounding a reactor core and filled with water to a predetermined level above the core. In an exemplary reactor, the water level is controlled by a plurality of conventional feedwater flow control valves which operate in parallel. By selectively positioning the control valve, the amount of feedwater admitted to the pressure vessel is controlled, and in turn controls the water level within the pressure vessel.

Conventional feedwater control valves typically include a hydraulic or air actuator which selectively opens or closes the valves for varying the flowrate of the feedwater therethrough. Each of the control valve actuators is independently controlled in a conventional closed loop control system which automatically positions the valve in response to a desired valve position demand signal as is conventionally known. The actual position of the value is conventionally measured for providing a signal which is subtracted from the demand signal to create an error signal which is conventionally driven toward a zero value by the closed loop control system for positioning the valve for obtaining the desired flowrate therethrough.

In a conventional hydraulic control system, the valve stem of the control valve which controls the flowrate therethrough is connected to an actuator rod which extends from a conventional servopiston in a hydraulic cylinder. Pressurized hydraulic fluid is selectively provided to the cylinder for translating the piston and actuator rod joined thereto in selectively opposite directions for positioning the control valve stem. Solenoid valves are operatively connected to both the cylinder and a conventional valve controller for suitably channeling the hydraulic fluid to opposite sides of the piston for moving the piston and the actuator rod. The solenoid valves are also joined to a conventional hydraulic pump and accumulator for providing the pressurized hydraulic fluid.

Such a conventional hydraulic actuator typically opens or closes the valve at a single, maximum speed in response to change in the position demand signal which will, therefore, typically result in an overshoot of the desired valve position. The closed loop control will then reverse the movement of the actuator in order to compensate. Such cyclical actuator rod travel will be repeated until the desired actuator position is obtained. In practice, however, a relatively large dead band is required to prevent the actuator from undesirably oscillating in trying to reach the desired actuator rod position. The deadband, therefore, allows the actuator to position the control valve without undesirable oscillating of the valve. However, the deadband also introduces a corresponding error in the ability of the control valve to effect a specific flowrate. The larger the deadband, the larger will be the potential flowrate error from the control valve.

The reactor vessel water level in a conventional boiling water reactor must be maintained between prescribed limits during all phases of plant operation. If the water level becomes erratic and.exceeds a trip setpoint, either high or low, the reactor system will rapidly shut down in a conventional SCRAM operation. It typically takes up to several days to recover from a reactor SCRAM, during which time, power production is interrupted with a resulting loss in revenue.

Furthermore, a conventional hydraulic, orair, actuator control system includes many fluid conduits, connections, and components such as the solenoid valves which may fail or leak during operation. Failure of these elements may lead to a failure of the control system resulting in an undesirable reactor outage, which increases the amount of maintenance required, and decreases the overall reliability of the control system.

Furthermore, in order to test a conventional hydraulic actuator, temporary scaffolds must be erected around the actuator and valve assembly in order to access the control system of the actuator disposed at the top thereof. Temporary instrumentation must be connected to the actuator control system in order to test for stroke speed, deadband, and linearity, for example.

### Summary of the Invention

The present invention provides a control system for an actuator output rod comprising:
an electrical motor having a drive shaft;
means for positioning said actuator rod in response to rotation of said drive shaft;
means for sensing position of said actuator rod to provide a position signal indicative of said actuator rod position; and
a controller operatively joined to said motor and said position sensing means for controlling rotational speed of said drive shaft to control said actuator rod position in response to a position demand signal;
said controller including a predetermined actuator rod speed schedule for providing an actuator rod speed signal to control said drive shaft speed and in turn said actuator rod position in response to a position error signal represented by the difference between said position demand signal and said position signal; and
said actuator rod speed schedule providing:
a zero value of said speed signal from a zero value of said error signal up to a deadband value of said error signal;
a modulating speed value of said speed signal from said error signal deadband value up to a modifying value of said error signal, said modifying value being greater than said deadband value, for moving said actuator rod at a modulating speed; and
a transient speed value of said speed signal for values of said error signal greater than a transient value, said transient value being greater than said modulating value, for moving said actuator rod at a transient speed greater than said modulating speed.

Features of the present invention are as follows: an actuator control system having a relatively small deadband; an actuator control system having variable actuator speed of operation; an actuator control system which is easily testable from a floor level adjacent to the actuator; an electric actuator control system which eliminates hydraulic components for obtaining improved performance, reliability, and maintainability; and an actuator control system effective for controlling a feedwater flow valve for controlling water level in a boiling water reactor pressure vessel.

According to the invention, a control system for an actuator output rod includes an positioning the actuator rod in response to rotation of the motor. A sensor is operatively joined to the actuator rod to provide a position signal indicative of the position thereof. The electrical controller is operatively joined to the motor and the sensor for controlling the rotational speed of the motor to control the actuator rod position in response to a position demand signal. The controller includes a predetermined actuator rod speed schedule for providing an actuator rod speed signal to control the motor speed and in turn the actuator rod position in response to a position error signal. The schedule provides a zero value of the speed signal up to a deadband value of the error signal, a modulating value of the speed signal from the error signal deadband up to a modulating value of the error signal which is greater than the former, and a transient value of the speed signal which is greater than the modulating speed for values of the error signal greater than the transient value thereof and greater than the modulating value thereof.

### Brief Description of Drawings

The novel features believed characteristic of the invention are set forth and differentiated in the claims. The invention, in accordance with a preferred and exemplary embodiment, together with further objects and advantages thereof, is more particularly described in the following detailed description taken in conjunction with the accompanying drawings in which:
Figure 1 is a schematic representation of an exemplary boiling water reactor including an actuator control system in accordance with one embodiment of the present invention for controlling water level therein.
Figure 2 is a schematic elevation representation of an exemplary feedwater control valve including the actuator control system illustrated in Figure 1.
Figure 3 is a schematic representation of the actuator control system used for controlling the feedwater control valve illustrated in Figure 2.
Figure 4 is a schematic representation of an actuator rod speed schedule in a closed loop control path representing operation of the actuator control system illustrated in Figure 3.

### Mode(s) For Carrying Out the Invention

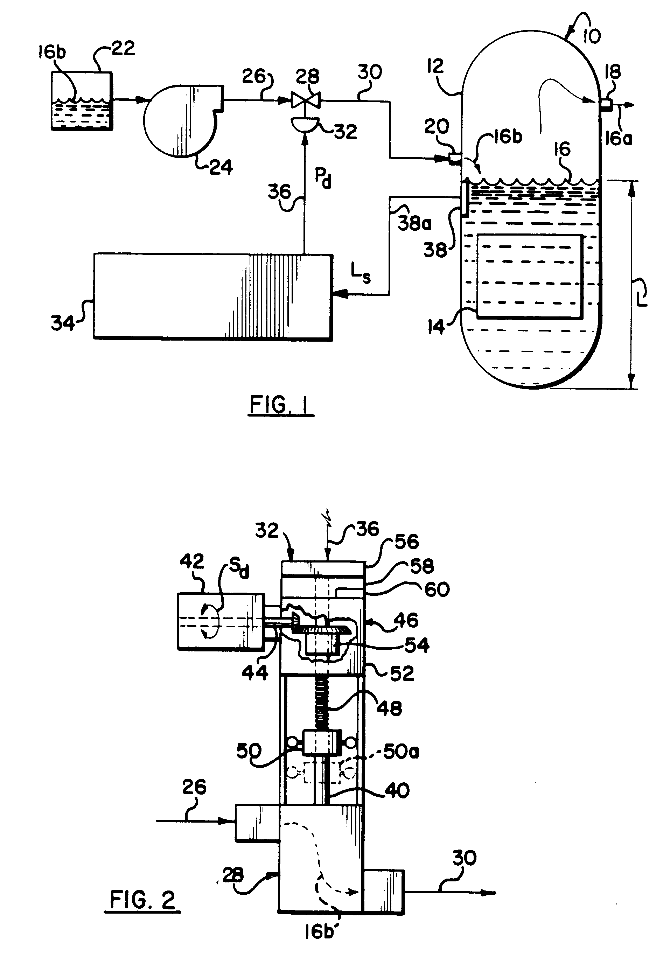

Illustrated schematically in Figure 1 is an exemplary boiling water nuclear reactor 10 including a reactor pressure vessel 12 in which is conventionally supported a reactor core 14. The vessel 12 is filled with water 16 to a predetermined level Lfrom the bottom of the vessel 12 to completely cover the core 14. The reactor 10 is conventional and the additional conventional components typically found therein are omitted from Figure 1 for clarity of presentation. In operation, the reactor core 14 boils a portion of the water 16 for generating steam 16a which is conventionally discharged from the vessel 12 through a conventional steam outlet or nozzle 18.

Water is conventionally reintroduced into the pressure vessel 12 as feedwater 16b admitted through a feedwater inlet 20. The feedwater 16b is provided from a conventional feedwater source 22 which is conventionally joined in flow communication with a conventional feedwater pump 24 which pumps the feedwater 16b through a first conduit 26, through one or more conventional feedwater control valves 28, and in turn through a second conduit 30 disposed in flow communication with the feedwater inlet 20. By selectively opening and closing the feedwater valve 28, the amount of feedwater 16b admitted into the pressure vessel 12 is selectively varied for controlling the level L of the water 16 therein, and controlling its level above the reactor core 14.

In accordance with the present invention, an actuator control system 32 is operatively connected to the feedwater control valve 28 for selectively varying flow of the feedwater 16b through the control valve 28 between maximum and minimum, for example zero, flowrates for, in turn, controlling the reactor water level L.

A conventional plant controller 34 is electrically connected to the actuator control system 32 through a conventional electrical line 36 for providing a position demand signal P_{d} for selectively positioning the valve 28. A conventional water level sensor 38, or means for measuring the level Lof the water 16 within the vessel 12 is connected to the plant controller 34 through an electrical line 38a for providing a level signal Lₛ thereto which is indicative of the water level L. The plant controller 34 conventionally varies the position demand signal P_{d} in response to the water level signal Lₛ for adjusting the valve 28 to maintain a predetermined value of the water level L.

The actuator control system 32 and the feedwater control valve 28 controlled thereby are illustrated schematically in more particularity in Figure 2. The valve 28 includes a conventional movable valve stem 40, which, in this exemplary embodiment, is translatable downwardly and upwardly for closing and opening the valve 28 for varying flowrate of the feedwater 16b channeled therethrough.

The actuator control system 32 includes a conventional electrical motor 42 having an output drive shaft 44 which is selectively rotatable in opposite directions and at a variable rotational speed S_{d}. The motor 42 and the drive shaft 44 are conventionally joined to an actuator 46 which includes an actuator output rod 48 having an end joined to a corresponding end of the valve stem 40 at a conventional coupling 50. In this exemplary embodiment of the invention, the valve 28 is opened or closed by translation upwardly and downwardly of the valve stem 40, and correspondingly, the output rod 48 must therefore translate upwardly and downwardly for positioning the valve stem 40.

Accordingly, a conventional mechanical interface 52, or means for positioning the actuator rod 48 in response to rotation of the drive shaft 44 is provided to convert rotation of the drive shaft 44 to translation of the output rod 48 and the valve stem 40 joined thereto. The mechanical interface 52 includes the output rod 48 being in the form of a conventional ball screw which extends threadingly through a conventional ballnut 54 conventionally joined to the drive shaft 44. Upon rotation of the drive shaft44, the ball nut 54 correspondingly rotates, and the output rod 48 which is conventionally prevented from rotating by the coupling 50 for example, therefore, translates either upwardly or downwardly through the ball nut 54 for raising and lowering the valve stem 40. Referring again to Figure 2, the lower portion of the output rod 48, the coupling 50, and the valve stem 40 are shown in solid line in a first, up position, orfully open position, for obtaining a maximum flowrate of the feedwater 16b through the valve 28, and in dashed line, designated 50a for the coupling 50 for example, in a second, down position, or fully closed position, for obtaining a minimum flowrate through the valve 28 which is preferably zero in this embodiment.

The control system 32 further includes an electrical actuator controller 56 operatively connected to the plant controller 34 (see Figure 1) through the line 36 for receiving the position demand signal P_{d}. Aconven- tional electrical interface 58 is operatively connected between the mechanical interface 52 and the controller 56 and includes, for example, a conventional position sensor 60 or means for sensing position of the actuator rod 48.

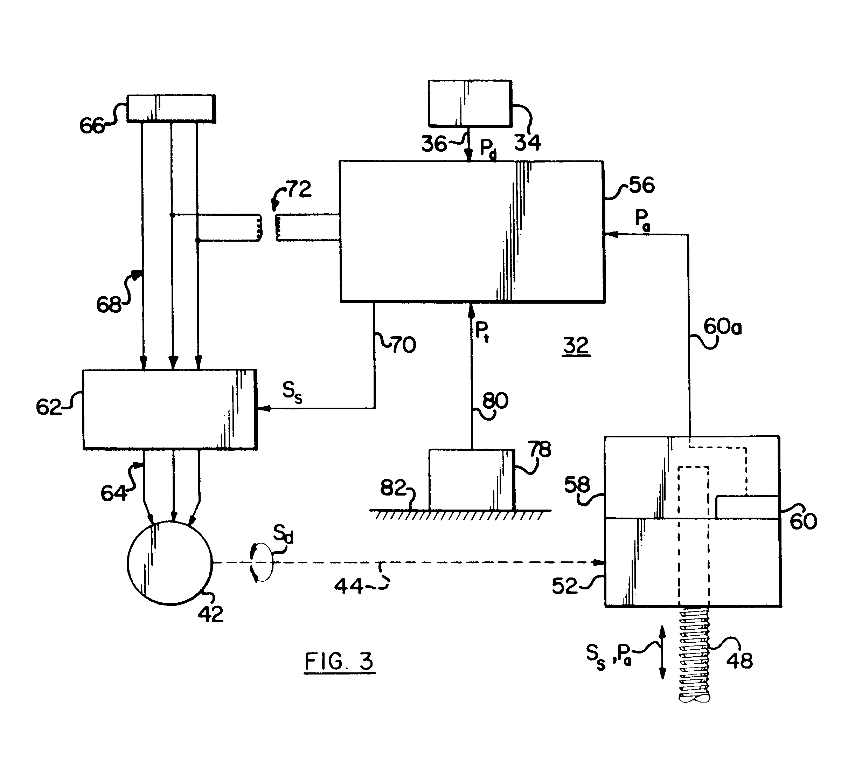

More specifically, and as shown in further detail in Figure 3, the position sensor 60 is a conventional, preferably noncontact position sensor disposed adjacent to the actuator rod 48 for sensing its vertical position to provide a position signal Pₐ indicative of its actual position (Pₐ) to the controller 56 through an electrical line 60a.

Also in the preferred embodiment of the present invention, the motor 42 is a conventional three phase motor which is conventionally operatively connected to a conventional variable frequency power supply 62 through three electrical lines 64. Three phase power, or other electrical power, is conventionally provided to the power supply 62 from a conventional power source 66, for example plant power, through three electrical supply lines 68.

The actuator controller 56 is preferably a conventional microprocessor which may be conventionally programmed and reprogrammed as desired for tailoring operation of the actuator control system 32. The controller 56 is operatively electrically joined to the motor 42 through an electrical output line 70 joined to the power supply 62 which is in turn joined to the motor 42 through the electrical lines 64. In the exemplary embodiment illustrated, a conventional 110 volt transformer 72 is operatively electrically connected between the supply lines 68 and the controller 56 to provide power thereto which may be used for powering any desired instrumentation for observing operation of the control system 32.

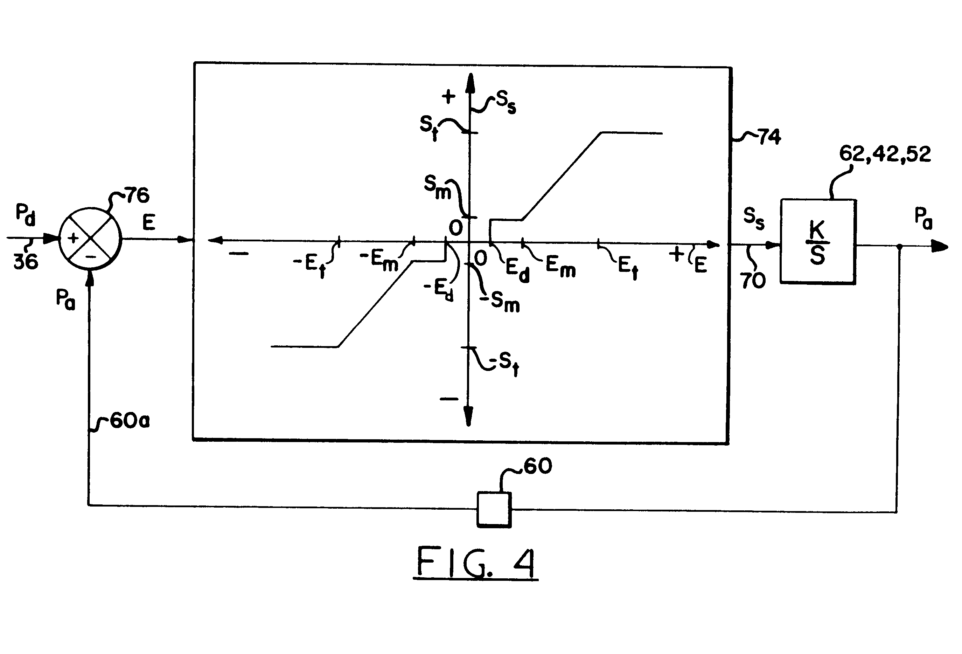

In response to the position demand signal P_{d} from the plant controller 34 and in response to the position signal Pₐ from the position sensor 60, the controller 56 is effective for controlling in a closed feedback loop the rotational speed S_{d} of the drive shaft 44 to in turn control the actuator rod position Pₐ for providing improved performance. Illustrated schematically in Figure 4 is the preferred closed feedback loop schematically representing operation of the controller 56 for selectively positioning the actuator output rod 48 and in turn the valve stem 40 for controlling flow of the feedwater 16b through the valve 28. More specifically, the controller 56 includes in accordance with the present invention, a predetermined actuator rod speed, or stroke rate, schedule 74, or means for providing an actuator rod speed signal Sₛ to control the drive shaft speed S_{d} (see Figure 3) and in turn the actuator rod speed or stroke rate (Sₛ) and position Pₐ in response to a position error signal E represented by the difference between the position demand signal P_{d} and the position signal Pₐ.

The speed signal Sₛ is conventionally selected in magnitude and sign, i.e., either plus or minus, to effect a desired speed Sₛ for the output rod 48 in either an upwardly or downwardly direction. Since the output rod 48 is driven by the motor 42 through the mechanical interface 52, the speed and position Sₛ, Pₐ of the output rod 48 are directly related to the speed S_{d} of the motor 42 and its corresponding rotary position. A conventional comparator, or subtractor, 76 is electrically connected to both the line 36 and the position sensor line 60a for receiving the respective signals therefrom, which are then subtracted in the comparator 76 for obtaining the difference therebetween which provides the error signal E.

The actuator rod speed schedule 74 is conventionally contained in the actuator controller 56, through suitable software for example, and preferably provides a zero value of the speed signal Sₛ from a zero value of the error signal E up to a predetermined first, or deadband value of the error signal E_{d}. The schedule 74 also provides a first, or modulating speed value of the speed signal Sₘ which is preferably constant from the error signal deadband value E_{d} up to a second, or modulating value of the error signal Eₘ, which value Eₘ is greater than the deadband value E_{d}, for moving the actuator rod 48 at the corresponding modulating speed Sₘ. The schedule 74 preferably further provides a second, or transient speed value of the speed signal Sₜ which is preferably constant for values of the error signal E greater than a third or transient value of the error signal Eₜ, which is greater than the modulating value Eₘ, for moving the actuator rod 48 at a corresponding transient speed Sₜ which is greater than the modulating speed Sₘ.

The schedule 74 preferably also provides both positive and corresponding negative values for the speed signal Sₛ for corresponding positive and negative values of the position error signal E for obtaining similar operation for opposite direction movement of the actuator rod 48 and corresponding opening and closing of the valve 28. Although in the preferred embodiment illustrated in Figure 4, the positive and negative values of the speed signal Sₛ are identical in magnitude for identical magnitudes of the positive and negative values of the position error signal E, the operation thereof need not be so symmetrical. The controller 56 in the form of a microprocessor allows tailoring of the schedule 74 as desired in accordance with the present invention, with each of the positive and negative values of E_{d}, Eₘ, Eₜ, Sₘ, and Sₜ being selectively changeable for tailoring performance of the output rod 48 as desired. In this way, the modulation speed Sₘ and the transient speed Sₜ are independently adjustable, and, the magnitudes of the position error signal E which establishes the modulation speed Sₘ and the transient speed Sₜ are also independently adjustable.

Accordingly, the speed signal Sₛ may have a negative or positive value and vary in magnitude in accordance with the schedule 74 which speed signal Sₛ may be conventionally provided to the power supply 62 in the form of a corresponding frequency for operating the motor 42 in either of two opposite directions and at corresponding rotational speeds S_{d} which are selected based on the rotational-to-translational speed conversion ratio of the mechanical interface 52 for effecting corresponding upwardly or downwardly translation of the output rod 48 at corresponding speeds Sₛ. The output line 70 (see Figure 3) may be in the form of three lines: a first line being used to effect rotation of the drive shaft 44 in one direction to open the valve 28; a second line being used to effect rotation of the drive shaft 44 in the opposite direction to close the valve 28; and a third line being used to effect the magnitude of the drive shaft speed S_{d} in a conventional manner. Also shown in Figure 4, is the conventionally known Laplace transform, i.e., K/S, representation for the dynamic performance of the control system 32 from the power supply 62, through the motor 42 and the mechanical interface 52, and to the output rod 48. In this way, the speed signal Sₛ from the schedule 74 will effect rotation of the drive shaft 44 at the speed S_{d} and translation of the output rod 48 at the speed Sₛ with a corresponding position Pₐ of the output rod 48 over a predetermined time.

The schedule 74 illustrated in Figure 4 and described above is preferred for obtaining improved performance of operation of the output rod 48, and in turn improved performance of the feedwater control valve 28. More specifically, in this exemplary embodiment wherein the mechanical interface 52 is effective for translating the actuator rod 48 between the up, or first, position and the down, or second, position illustrated in Figure 2, and in turn translating the valve stem 40 between the open and closed positions, respectively, the flowrate of the feedwater16b channelled through the valve 28 is correspondingly varied between the maximum and minimum, or zero, flowrates, respectively. The total translation of the actuator rod 42 and the valve stem 40 between the open and closed positions defines the total stroke over which the valve 28 operates.

A particular advantage of the present invention is that the modulating speed Sₘ may be made considerably slower than the transient speed Sₜ for reducing the deadband between the minus and plus position error signals E_{d} for providing a more accurate position Pₐ of the output rod 48 and in turn of the valve stem 40 for providing a more accurate flowrate of the feedwater 16b through the valve 28 as required for accurately maintaining the level L of the water 16 in the pressure vessel 12 illustrated in Figure 1. For example, the transient speed Sₜ may have a value of about 25mm/second corresponding to the same value for a conventional hydraulic actuator. However, the modulating speed Sₘ is preferably considerably reduced below that value and may be about 10% of the maximum stroke rate represented by the transient speed Sₜ, or about 2.5mm/second. The conventional hydraulic actuator has a modulating speed Sₘ which is equal to its transient speed Sₜ, for example about 25mm/second, since it can only operate at one speed. That one speed must be large enough to quickly open and close the valve 28 during transient occurrences. However, in order to prevent excessive oscillation, a relatively large deadband is required as described above. Since the modulating speed Sₘ is substantially reduced in accordance with the present invention, overshoot of the output rod position Pₐ is correspondingly reduced for more quickly reaching the desired position as represented by the demand signal P_{d}. Accordingly, with a reduction in overshoot, the positive and negative position error deadband values E_{d} may be considerably reduced over those used in a conventional hydraulic control system. For example, the error signal deadband value E_{d} may be as little as about plus or minus 0.25% of the total stroke of the output rod 48 in accordance with an exemplary embodiment of the present invention which is considerably less than the minimum 1.0% - 3.0% deadband which may be obtained using the conventional hydraulic control system.

Referring again to Figure 4, the modulating speed Sₘ is preferably constant between the deadband and modulating values E_{d} and Eₘ, i.e., for small positive and negative position errors, and is relatively slow, for example 10% of the maximum, transient speed Sₜ to more accurately control the position Pₐ of the output rod 48 without undesirable overshoot. In this way, during steady state or steady power operation of the reactor 10 at a particular water level L, the control system 32 is initiated more quickly due to the smaller deadband (E_{d}), but at a reduced speed (Sₘ) for more accurately controlling the water level L.

For a relatively large change in the position demand signal P_{d} representing a transient event, the error signal E will be correspondingly large and the full, transient speed Sₜ may be used for more rapidly bringing the output rod 48 to the required position. The transient speed Sₜ is also preferably constant and represents the maximum speed desired for particular transient events. As the output rod 48 approaches the desired position represented by the position demand signal P_{d} during the transient event, the position error signal E will correspondingly reduce, and once it falls below the desired error signal transient value Eₜ, the speed signal Sₛ begins to fall below the maximum transient value Sₜfor providing a smooth transition between the transient speed Sₜ and the lower modulating speed Sₘ. In the preferred embodiment, the speed signal Sₛ between the error signal modulating and transient values Eₘ and Eₜ preferably varies continuously therebetween. For example, the speed signal Sₛ preferably increases linearly from the modulating speed Sₘ at the modulating error Eₘ to the transient speed Sₜ at the transient error Eₜ. The preferred positive and negative error signal values E_{d}, Eₘ, and Eₜ may be selected for each particular design and suitably optimized by conventional analysis, or by trial and error, for obtaining quick response of the output rod 48 for transient operation above the transient error value Eₜ, and slow response for steady state or modulating operation of the output rod 48 below the desired error modulating value Eₘ. The difference between Eₘ and Eₜ is preferably selected for ensuring a smooth transition response without undesirable overshoot between the two speeds Sₜ, Sₘ as the output rod 48 decreases in speed from the transient speed Sₜ to the modulating speed Sₘ and approaches the desired position (P_{d}), with the error signal E correspondingly approaching zero.

The improved control of the output rod 48 correspondingly improves control of t he water level L in the pressure vessel 12 as shown in Figure 1. When a particular value of the water level L is desired, a corresponding value of the position demand signal P_{d} is sent by the plant controller 34 to the actuator control system 32 which will more quickly and more accurately control the flowrate of the feedwater 16b channeled through the valve 28 and through the feedwater inlet 20 into the pressure vessel 12 for increasing or decreasing the water level therein. In this way, undesirably large variations in the water level L will be avoided, and thus reduce the likelihood of a SCRAM operation.

Since the actuator controller 56 is in the preferred form of a microprocessor, the controller 56 may be conventionally programmed to detect certain failures within the actuator control system 32, including, for example, the failure of the position sensor 60 to provide a signal, and effect predetermined remedial action automatically. Other exemplary failures include interruption of the position demand signal P_{d}; interruption of power to the control system 32; interruption of power to the power supply 62; error values greater than the error deadband E_{d} for greater than a preset amount of time; a failure of the power supply 62; over temperature of the actuator motor 42; and certain failures of the controller microprocessor (56) itself. Of course, suitable additional sensors and interconnections between the various components of the actuator control system 32 will be required and may be conventionally provided. For any of these or other failures, the controller 56 preferably provides a default signal to lock the output rod 48 in its last position prior to such failure, or the output rod 48 may be suitably driven to its open or closed position or any position in between as desired.

Referring again to Figure 3, the control system 32 may further include a manual control station 78 operatively electrically joined to the actuator controller 32 through an electrical line 80. The control station 78 is preferably disposed adjacent to the feedwater control valve 28 and preferably at the level of the floor 82 so that it is readily accessible by maintenance personnel. The control station 78 is preferably effective for selectively providing a test value of the position demand signal Pₜ to the controller 58 for selectively positioning the output rod 48, and in turn the valve stem 40 of the control valve 28 for the testing thereof. For example, the test value Pₜ may be selected for positioning the output rod 48 at any desirable location between the open and closed positions for observing operation thereof. The test value Pₜ may be suitably large or small for causing the output rod 48 to travel at the slow modulating speed Sₘ or at the fast tran- sientspeed Sₜ for observing proper operation thereof.

Although the actuator control system 32 as described above has particular utility for controlling operation of the feedwater control valve 28 for controlling the water level L within the pressure vessel 12, it may be used also for other applications requiring improved accuracy in a closed loop feedback system. For example, the actuator control system 32 may be applied also to conventionally known recirculation system motor-generator set fluid coupler scoop tube positioner; recirculation system flow control valve; control valves for feedwater heater level control, or feedwater pump minimum flow bypass, or main turbine moisture separator level control; or feedpump turbine speed control. Or, in any application where an actuator output rod may be used for controlling operation of a controlled member. Furthermore, although the output rod 48 in the preferred embodiment is configured for translation only, alternate embodiments may use output rods which rotate for controlling members.

Accordingly, the actuator control system 32 as described above may effectively replace air or hydraulic control systems for improving system performance, reliability, and maintainability. The preferred two-speed (Sₘ, SJ control of the output rod 48 as described for the preferred embodiments, improves position control by reducing or eliminating undesirable overshoot and oscillation therefrom, and also considerably reduces the required deadband for further increasing accuracy and positioning of the output rod 48. The physical wear on the mechanical components of the system is considerably reduced when the output rod 48 is operating at the lower speed, and is also reduced by more quickly reaching the desired position thereof without undesirable oscillation. The operation of the control system 32 is also more readily testable by using the manual control station 78 for improving maintainability of the system. And, for the actuator control system 32 applied to controlling the water level L in the pressure vessel 12, more accurate control thereof is obtained resulting in improved performance of the reactor 10 with reduced likelihood of unintentional SCRAMs thereof due to excessive oscillation of the water level L.

While there has been described herein what is considered to be a preferred embodiment of the present invention, other modifications of the invention shall be apparent to those skilled in the art from the teachings herein, and it is, therefore, desired to be secured in the appended claims all such modifications.

## Claims

1. A control system for an actuator output rod comprising:
an electrical motor having a drive shaft;
means for positioning said actuator rod in response to rotation of said drive shaft;
means for sensing position of said actuator rod to provide a position signal indicative of said actuator rod position; and
a controller operatively joined to said motor and said position sensing means for controlling rotational speed of said drive shaft to control said actuator rod position in response to a position demand signal;
said controller including a predetermined actuator rod speed schedule for providing an actuator rod speed signal to control said drive shaft speed and in turn said actuator rod position in response to a position error signal represented by the difference between said position demand signal and said position signal; and
said actuator rod speed schedule providing:
a zero value of said speed signal from a zero value of said error signal up to a deadband value of said error signal;
a modulating speed value of said speed signal from said error signal deadband value up to a modifying value of said error signal, said modifying value being greater than said deadband value, for moving said actuator rod at a modulating speed; and
a transient speed value of said speed signal for values of said error signal greater than a transient value, said transient value being greater than said modulating value, for moving said actuator rod at a transient speed greater than said modulating speed.

2. A control system according to claim 1 further including a variable frequency power supply operatively joined to said motor and said controller for varying said drive shaft rotational speed in response to said speed signal from said controller.

3. A control system according to claim 2 further including a feedwater control valve for selectively varying flow of feedwater to a nuclear reactor pressure vessel, said control valve having a movable valve stem fixedly joined to said actuator rod for being positioned thereby to vary said feedwater flow.

4. A control system according to claim 3 wherein said positioning means are effective for translating said actuator rod between first and second positions and in turn translating said valve stem between open and closed positions, respectively, for varying said feedwater flow through said control valve between maximum and minimum flowrates, respectively.

5. A control system according to claim 4 wherein:
said speed signal modulating value is constant;
said speed signal transient value is constant; and
said speed signal between said error signal modulating and transient values varies continuously.

6. A control system according to claim 5 wherein:
said actuator rod and said valve stem have a total stroke between said open and closed positions;
said speed signal modulating value is about 10% of said speed signal transient value; and
said error signal deadband value is about 0.25% of said total stroke.

7. A control system according to claim 5 further including a manual control station operatively joined to said controller and disposed adjacent to said feedwater control valve, said manual control station being effective for selectively providing a test value of said position demand signal to said controller for selectively positioning said actuator rod and in turn said valve stem of said control valve between said open and closed positions, and at said modulating and transient speeds.
